**Europäisches Patentamt**

**European Patent Office**

**Office européen des brevets**

(19)

(11) Veröffentlichungsnummer : **0 185 339**
**B1**

(12) # EUROPÄISCHE PATENTSCHRIFT

(45) Veröffentlichungstag der Patentschrift :
15.06.88

(21) Anmeldenummer : 85116000.2

(22) Anmeldetag : 14.12.85

(51) Int. Cl.⁴ : **B 65 G 67/24**

(54) **Verfahren und Vorrichtung zum Entladen von hintereinander angeordneten Reihen von aufeinandergeschichteten Gütern.**

(30) Priorität : 21.12.84 DE 3447757

(43) Veröffentlichungstag der Anmeldung :
25.06.86 Patentblatt 86/26

(45) Bekanntmachung des Hinweises auf die Patenterteilung : 15.06.88 Patentblatt 88/24

(84) Benannte Vertragsstaaten :
FR GB IT SE

(56) Entgegenhaltungen :
FR-A- 2 070 004
FR-A- 2 318 089
US-A- 3 625 376

(73) Patentinhaber : BAYERISCHE MOTOREN WERKE
Aktiengesellschaft
Postfach 40 02 40 Petuelring 130 - AJ-36
D-8000 München 40 (DE)

(72) Erfinder : Schmid, Andreas
Allinger Strasse 107
D-8039 Puchheim (DE)
Erfinder : Hauzenberger Johann
Bruckdorf 6
D-8411 Sinzing (DE)

(74) Vertreter : Bücken, Helmut
Bayerische Motoren Werke Aktiengesellschaft Postfach 40 02 40 Petuelring 130 - AJ-30
D-8000 München 40 (DE)

## Beschreibung

Die Erfindung betrifft ein Verfahren zum Entladen von aufeinandergeschichteten Gütern sowie eine Vorrichtung zur Durchführung des Verfahrens.

Bei einem durch die FR-A-2 318 089 bekannten Verfahren und der zugehörigen Vorrichtung der Gattung des Patentanspruches 1 werden von einem Stapel quaderförmiger starrer Güter, wie Kisten o. ä. Behälter, jeweils einzelne Exemplare der obersten Lage an deren vorderer Unterkante mittels Reibungsantrieb des Gurtförderers hochgekantet, von diesem unterfahren und dann weggefördert. Für die Anwendung dieses Verfahrens und dieser Vorrichtung bei anderen Gütern und für ein rasches Entladen besteht weder eine Eignung noch eine Anregung.

Aufgabe der Erfindung ist es, das Verfahren der bekannten Gattung und die zugehörige Vorrichtung so weiterzubilden, daß ein besonders rasches Entladen von verformbaren und dadurch relativ zueinander beweglichen Gegenständen, insbesondere Kraftfahrzeugreifen, erreicht werden kann.

Zur Lösung dieser Aufgabe sieht die Erfindung das Verfahren mit den kennzeichnenden Merkmalen des ersten Anspruches vor. Die Erfindung basiert auf der Erkenntnis, daß man die einzelnen Reihen von unten entladen kann. Dadurch, daß die einzelnen Güter einer Reihe ineinander geschichtet sind, wird durch das Herausziehen der untersten Reihe die darüberliegende Reihe mit nach vorne gezogen. Es ist also nur erforderlich, eine geeignete Aufnahmeeinrichtung unter die unterste Lage einer Reihe zu bringen und dann die Güter von der Aufnahmeeinrichtung herausziehen zu lassen. Insbesondere eignet sich das erfindungsgemäße Verfahren zum Entladen von Automobilreifen. Untersuchungen haben ergeben, daß die Reifen keinerlei Beschädigungen und Qualitätseinbußen aufweisen. Auch ist es nicht erforderlich, die Aufnahmeeinrichtung während des Entladens höhenverstellbar auszuführen, da sie immer auf dem Behältergrund bleibt.

Als Aufnahmeeinrichtung eignet sich vorteilhafterweise ein Gurtförderer, der sich selbsttätig aufgrund der Reibung zwischen Gut und Förderer unter die unterste Lage einer Reifenreihe gräbt, wenn er gleichzeitig eine Förderbewegung ausübt. Dadurch wird neben einem Anheben der gesamten Reifenreihe gleichzeitig ein Herausziehen der untersten Schicht ohne weitere Zusatzmaßnahmen erzielt. Hierbei wird die Aufnahmeeinrichtung so lange unter die Reifen geschoben, bis diese sicher erfaßt werden können. Sodann wird die Vorschubbewegung eingestellt und nur noch die Transportbewegung aufrechterhalten. Auch können — je nach Größe des Gutes — Vorschub- und Transportbewegung so aufeinander abgestimmt werden, daß sich eine kontinuierliche Vorschubbewegung einstellt.

Unter der Bezeichnung Gurtförderer werden auch Band- bzw. Flachbandförderer verstanden, wobei in Abhängigkeit des Entladegutes für den Gurt entsprechende Materialien mit und ohne Profilierung verwendet werden können. Anspruch 3 zeigt eine bevorzugte Lösung der Aufgabe, wie derart aus dem Transportbehälter herausgeführte Reifen vereinzelt werden können, um von nachfolgenden Einrichtungen erkannt zu werden und dann entsprechend vorgegebener Ordnungskriterien weiter behandelt zu werden. Durch diese Ausbildung wird zudem erreicht, daß am Ende der Transporteinrichtung die Reifen einzeln hintereinanderliegend angeliefert werden. Ein Übereinanderliegen einer oder mehrerer Reifen ist dadurch ausgeschlossen. Welche Behandlung die entladenen Güter nach Passieren der Ausnahmeeinrichtung erfahren, hängt von der Art der Güter und ihrem Verwendungszweck ab.

Anspruch 4 beschreibt eine geeignete Vorrichtung zur Durchführung des Verfahrens. Die Vorrichtung ist hierbei derart aufgebaut, daß die zu transportierenden Güter von der Vorrichtung selbsttätig angehoben werden können und auf die nach der Aufnahmeeinrichtung folgenden Transporteinrichtungen übergeben werden können. Die Aufnahmeeinrichtung selbst hat hierbei zweckmäßigerweise die Form einer Rampe, um sich selbsttätig unter die unterste Schicht der Güter zu graben. In Abhängigkeit der zu entladenden Güter wird die Steilheit der Rampe und damit auch der Durchmesser der Umlenkrollen gewählt. Das Verschwenken der Aufnahmeeinrichtung um die horizontale Achse ermöglicht eine Anpassung der Rampensteigung an die zu fördernden Güter, während das Verschwenken um die vertikale Achse das Einfahren der Aufnahmeeinrichtung erleichtern kann. Damit wird bei fortschreitendem Entladen des Transportbehälters das Handling der Aufnahmeeinrichtung erleichtert.

Die vordere Umlenkrolle sollte hierbei wegen des Untergrabens so klein wie möglich, bevorzugt kleiner als 70 mm im Durchmesser ausgeführt werden.

Bevorzugt wird die Aufnahmeeinrichtung nach Anspruch 6 befestigt. Hierdurch entfallen eigene Gestelle. Je nach Gütern und Größe der Transportbehälter kann die Ausbildung nach Anspruch 7 sinnvoll sein. Bei sehr langen Transportbehältern wird es jedoch zweckmäßig sein, Aufnahmeeinrichtung und nachfolgende Gurtförderer in einer Ebene anzuordnen und bei fortschreitender Entleerung gemeinsam in den Transportbehälter einzufahren.

Vorteilhaft ist es, wenn die Aufnahmeeinrichtung eine komplette Reihe der abzutransportierenden Güter in ihrer gesamten Breite erfaßt. Dadurch wird verhindert, daß plötzlich der gerade nicht abgezogene Teil der Reihe umstürzt und die Aufnahmeeinrichtung verstopft (Anspruch 8).

Durch die Weiterbildung nach den Ansprüchen 9 und 10 wird eine Zentrierung und Führung für die Aufnahmeeinrichtung erreicht. Gleichzeitig wird dadurch vermieden, daß der Transportbehälter beschädigt wird. Auch können diese Führungs- und Abstandselemente dazu benutzt werden, um Zentriersignale zu liefern, damit der Aufnahmeeinrichtung programmgesteuert automatisch in den Transportbehälter eingefahren werden kann. Geeignete Führungs- und Abstandselemente beschreibt Anspruch 11.

Je nach Art der zu entladenden Güter ist es sinnvoll, den Aufnahmeteil mit Leitelementen seitlich auszustatten, um zu verhindern, daß zu Beginn des Entladevorganges die zu entladenden Güter seitlich von der Aufnahmeeinrichtung abgleiten oder daß bei fortgeschrittenem Entladevorgang je nach Art und Größe der Güter sich diese zwischen dem Förderband der Aufnahmeeinrichtung und der Innenwand des Transportbehälters verkeilen bzw. vom Transportband nicht erfaßt werden können. Auch kann es sinnvoll sein, die Leitelemente unabhängig von Aufnahmeteil und den nachfolgenden Gurtförderern neben diesen aufzustellen (Anspruch 14).

Je nach den zu entladenden Gütern kann auch die Weiterbildung nach Anspruch 15 vorteilhaft sein. Hierdurch wird um den Aufnahmeteil und die nachfolgenden Gurtförderern ein Tunnel gebildet, der witterungsempfindliche Güter geschützt entladen läßt.

Im folgenden wird die Erfindung anhand eines ausgewählten Beispiels näher erläutert. Es stellen dar:

Fig. 1 eine perspektivische Ansicht eines gefüllten Transportbehälters mit einer geeigneten Aufnahmeeinrichtung;

Fig. 2 eine Seitenansicht der Aufnahmeeinrichtung nach Fig. 1 mit angeschlossenem Gurtförderer;

Fig. 3-5 den Beginn des Entladevorganges des Tranportbehälters nach Fig. 1.

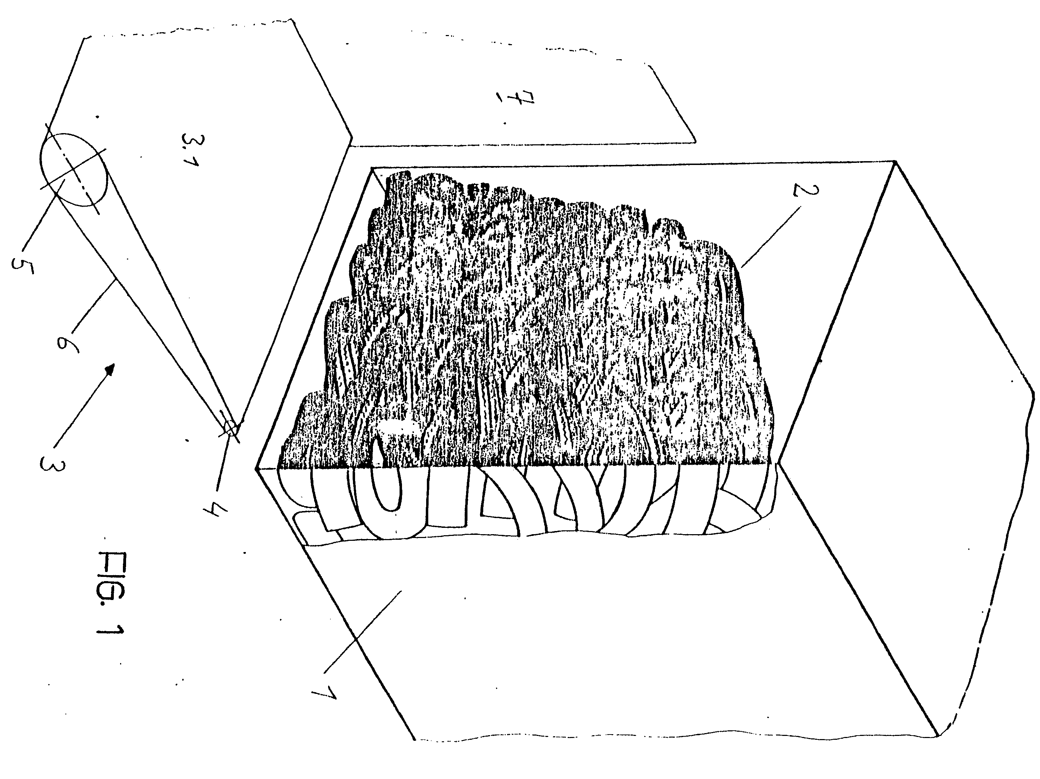

In Fig. 1 ist schematisch ein Teil eines Transportbehälters 1, beispielsweise eine Container oder ein Lastkraftwagen dargestellt. Seine hintere Rückwand ist entfernt. Im Inneren des Transportbehäters 1 sind in diesem Beispiel Reifen als zu entladendes Gut dargestellt. Die Reifen 2 sind reihenweise aufeinander geschichtet und zwar derart, daß sich das dargestellte Muster nach Art eines Fischgrätenmusters ergibt. Dadurch wird erreicht, daß jede einzelne Reihe von Reifen mit der nächstfolgenden nicht verbunden ist und daß die einzelnen Reifen einer Reihe einen relativ stabilen Verband bilden.

Vor der geöffneten Rückwand des Transportbehälters 1 ist schematisch eine Aufnahmeeinrichtung 3 dargestellt. Diese besteht aus einem Gurtförderer 3.1. Die vordere Umlenkrolle 4 ist hierbei so klein wie möglich ausgebildet. Die hintere Umlenkrolle 5 weist einen wesentlich größeren Durchmesser auf. Die beiden Umlenkrollen 4 und 5 sind derart angeordnet, daß der Leertrum 6 parallel zum Boden des Transportbehälters verläuft. Dadurch ergibt sich für die Aufnahmeeinrichtung 3 die Form einer Rampe.

Neben der Aufnahmeeinrichtung 3 ist weiterhin schematisch ein Leitelement 7 dargestellt, welches für die zu entladenen Güter eine seitliche Begrenzungswand bildet. Das Leitelement 7 kann hierbei fest mit der Aufnahmeeinrichtung 6 verbunden sein oder als separates Teil ausgebildet werden, welches entweder mit dem Transportbehälter 1 verbunden ist oder auf dem Boden steht. Üblicherweise sind rechts und links neben der Aufnahmeeinrichtung 3 Leitelemente 7 angeordnet.

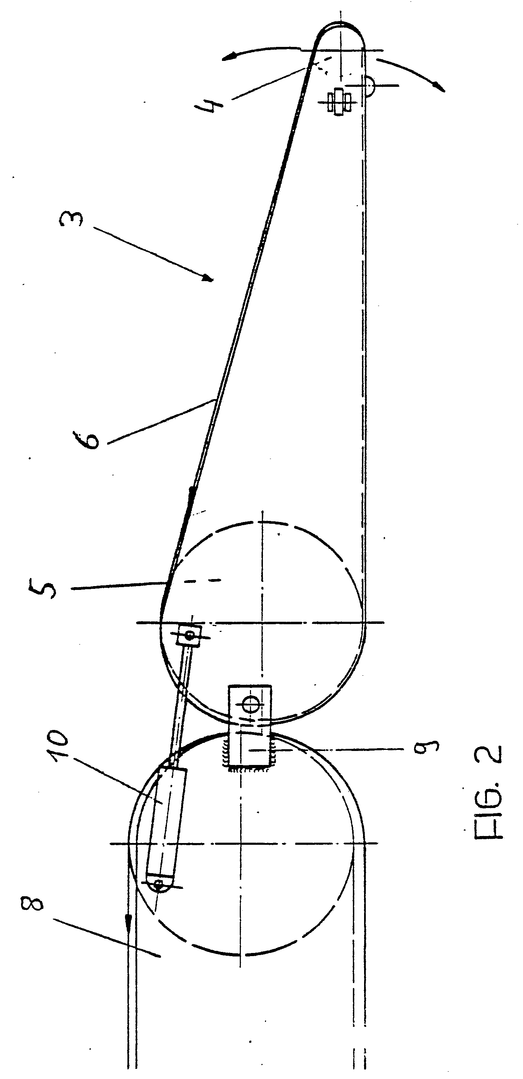

In Fig. 2 ist eine Seitenansicht der Aufnahmeeinrichtung 3 mit einem nachgeschalteten Gurtförderer 8 dargestellt. Insbesondere in Fig. 2 ist erkennbar, wie die vordere Umlenkrolle 4 und die hintere Umlenkrolle 5 angeordnet sind, damit eine geeignete Rampe, die ein Unterschieben unter die untersten Lage der zu entladenden Güter erlaubt, ausgebildet sein kann. Die Aufnahmeeinrichtung 3 selbst ist ebenfalls als Gurtförderer ausgebildet und weist hierzu die üblichen, allgemein bekannten Elemente auf. Selbstverständlich ist ebenfalls dafür gesorgt, daß der Gurt eine entsprechende Spannung aufweist.

Um die Aufnahmeeinrichtung 3 besser in den Transportbehälter 1 einfahren zu können, ist sie verschiebbar und um eine horizontale Achse 9 verschwenkbar gelagert. Zum Verschwenken dient die Zylinderkolbeneinrichtung 10, die in geeigneter Weise angesteuert werden kann. Die Zylinderkolbeneinheit 10 selbst ist an den nachfolgenden Gurtförderer 8 in geeigneter Weise angeordnet. Der Gurtförderer 8 selbst ist üblicher Bauart und wird deshalb nicht näher beschrieben.

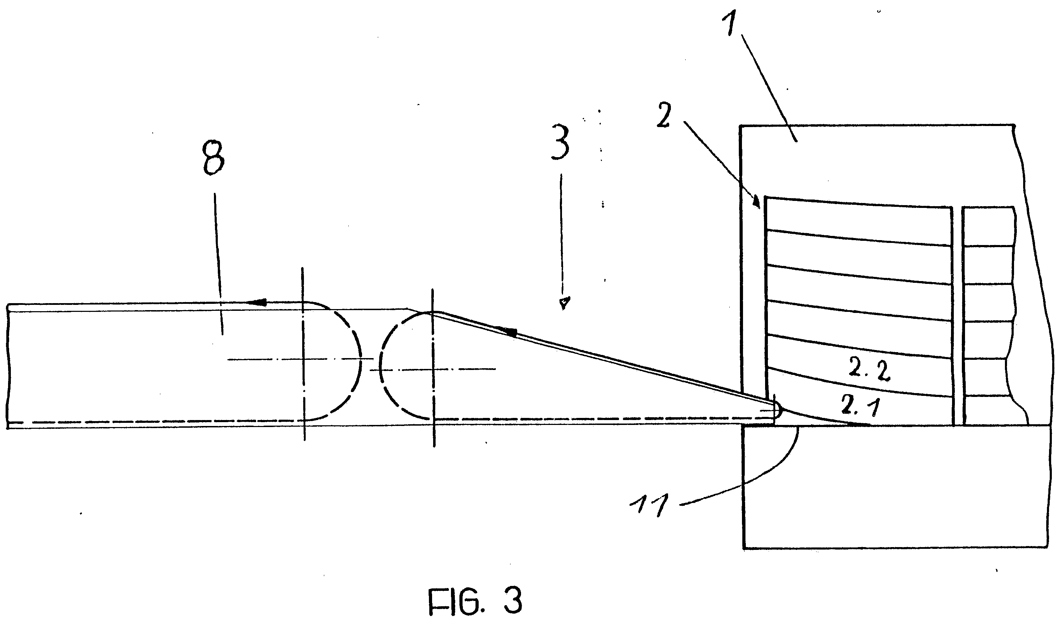

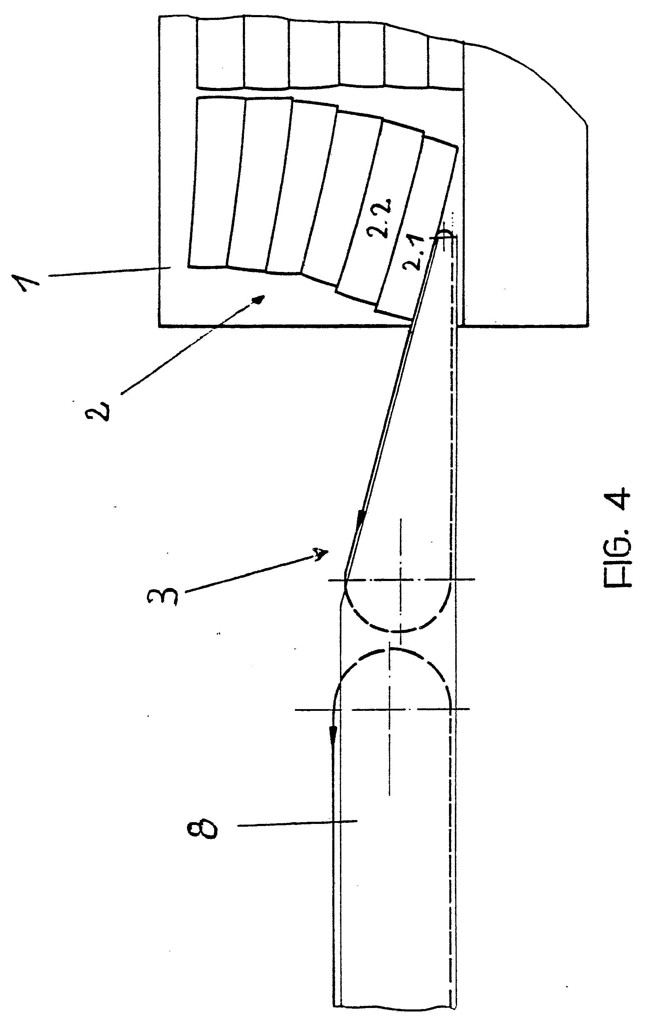

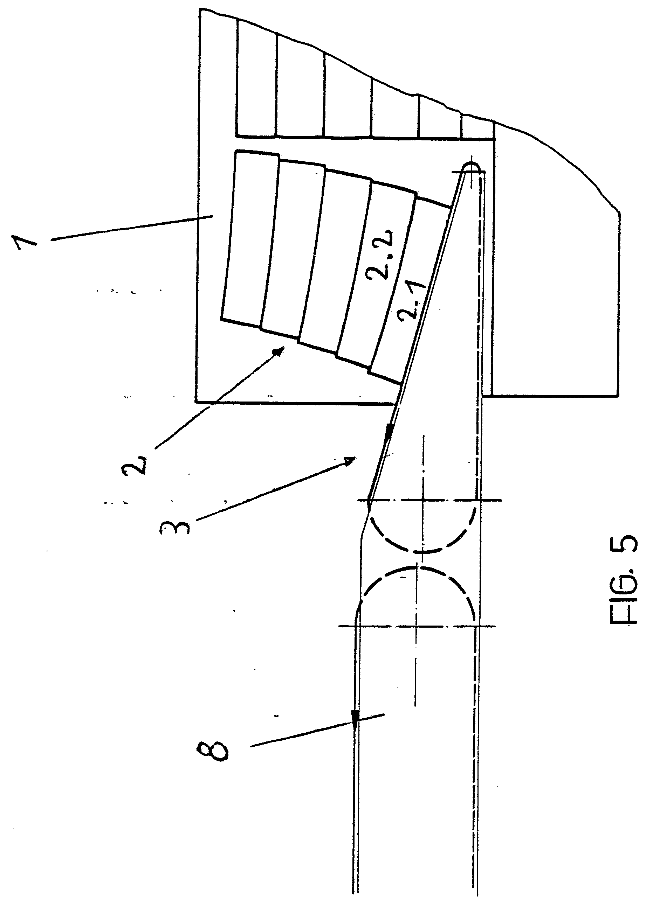

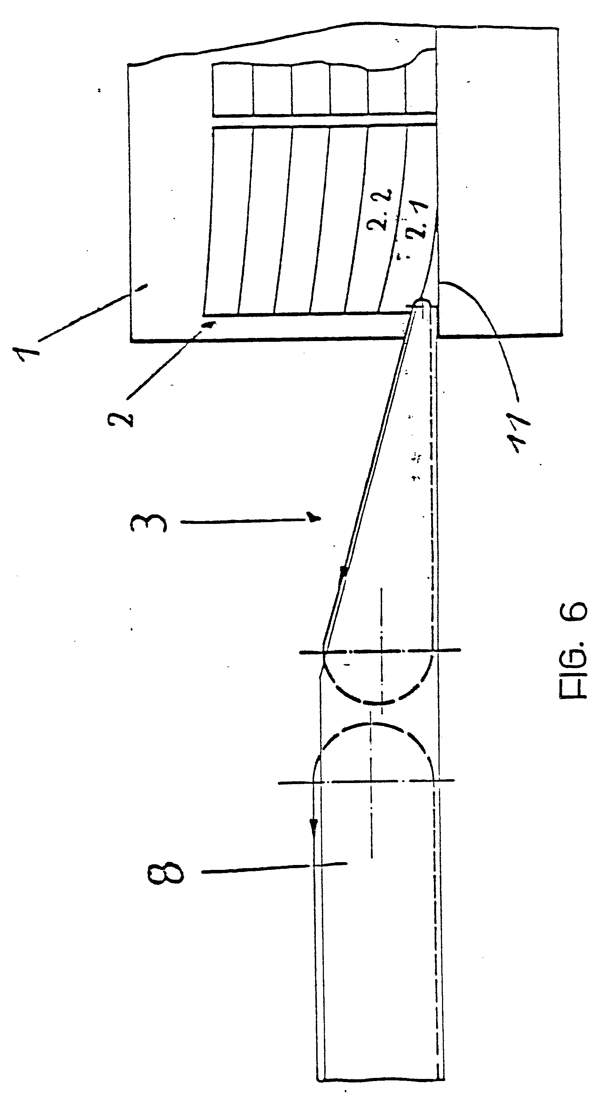

In den Fig. 3 bis 5 ist der Beginn des Entladevorganges schematisch dargestellt. Wie insbesondere in Fig. 3 ersichtlich, wird die Aufnahmeeinrichtung 3 mit ihrem Leertrum nahezu parallel zum Boden 11 des Transportbehälters von der Zylinderkolbeneinheit 10 geneigt. Sodann wird die Aufnahmeeinrichtung 3 eingeschaltet, so daß der Fördergurt umläuft. Die Umlaufrichtung ist derart gewählt, daß eine Transportbewegung von dem Transportbehälter 1 weg in Richtung auf den Gurtförderer 8 stattfindet. Die so eingeschaltete Aufnahmeeinrichtung wird nun mit ihrem vorderen Ende mit geringstmöglichem Abstand über dem Boden 11 des Transportbehälters 1 auf die unterste Lage 2.1 der Reifen 2 zubewegt. Aufgrund der Förder- und Vorschubbewegung kann die Aufnahmeeinrichtung 3 auf die Reifenlage 2.1 eine Hub-Zug-Kraft ausüben. Dadurch ist es der Aufnahmeeinrichtung 3 möglich, sich unter gleichzeitigem Fördern unter die unterste Lage 2.1 der Reifen zu graben. Dadurch wird die gesamte Reifenreihe angehoben und gleichzeitig die Lage 2.1 aus dem Transportbehälter 1 hinausgefördert. Gleichzeitig wird die Aufnahmeeinrichtung 3 weiter in den Transportbehälter 1 eingeschoben, so daß die Reifen sicher erfaßt werden. Durch das Abfördern der Lage 2.1 werden gleichzeitig die darüberliegenden Lagen ebenfalls abtransportiert, indem diese nach und nach auf die Aufnahmeeinrichtung 3 fallen. Begünstigt wird das Fallen auf die Aufnahmeeinrichtung 3 dadurch, daß die Reifen — wie in Fig. 1 ersichtlich — gestapelt sind, so daß durch das Herausziehen der untersten Lage 2.1 bereits die darüber befindliche Lage teilweise mit aus dem Transportbehälter 1 gezogen wird.

Auf diese Art wird nun die erste Reihe der Reifen vollständig aus dem Transportbehälter 1 herausgefördert. Zum Herausfördern der dahinterliegenden zweiten Reifenreihe wird nunmehr das gleiche Prinzip angewandt. Die Aufnahmeeinrichtung 3 wird hierbei mit ihrem nachgeschaltetem Gurtförderer 8 solange in den Transportbehälter 1 hineingefahren, bis sämtliche Reihen entladen sind.

Um sicherzustellen, daß der Boden des Transportbehälters 1 durch die Aufnahmeeinrichtung 3 nicht beschädigt wird, sind auf der Unterseite der Aufnahmeeinrichtung 3 geeignete Führungselemente anzubringen. Fig. 2 zeigt beispielsweise Führungselemente anzubringen. Fig. 2 zeigt beispielsweise Führungsrollen 12. Jedoch ist es auch denkbar, anstelle der Rollen Walzen oder Gleitkufen zu verwenden.

Die gleichen Führungs- und Abstandselemente sind sinnvollerweise an den beiden Seiten der Aufnahmeeinrichtung 3 angeordnet, wie beispielsweise ebenfalls Fig. 2 schematisch zeigt (Bezugsziffer 13), um sicherzustellen, daß eine Beschädigung der Seitenwände des Transportbehälters ausgeschlossen wird. Gleichzeitig dienen diese Elemente zur Zentrierung der Aufnahmeeinrichtung 3 beim Einfahren in den Transportbehälter 1.

**Patentansprüche**

1. Verfahren zum Entladen von hintereinander angeordneten Reihen von aufeinandergeschichteten Gütern (2), aus Transportbehältern (1), wie Lastkraftwagen, Container, Waggon o. ä., wobei mittels einer als Gurtförderer (3.1) ausgebildeten Aufnahmeeinrichtung (3) von dessen vorderstem Umkehrrollen-Bereich relativ geringen Durchmessers eine Hub-Zug-Kraft auf die Stirnseite der Güter ausgeübt wird, derart, daß die Güter an der Stirnseite angehoben, mittels einer Vorschubbewegung des Gurtförderers unterfahren und gleichzeitig nach außen abgezogen werden, dadurch gekennzeichnet, daß zum Entladen von verformbaren und dadurch relativ zueinander beweglichen Gütern (2), wie Kraftfahrzeugreifen, die auf dem Boden des Transportbehälters liegende unterste Lage (2.1) der Güter angehoben, unterfahren und zuerst abgezogen wird.

2. Verfahren nach Anspruch 1, dadurch gekennzeichnet, daß nach dem Unterfahren der vordersten Reihe der Güter (2) die Vorschubbewegung beendet wird, bis die unterfahrene Reihe vollständig abtransportiert ist.

3. Verfahren nach Anspruch 1 oder 2, dadurch gekennzeichnet, daß der Aufnahmeeinrichtung eine Vielzahl (8) von untereinander unabhängig antreibbaren Gurtförderern nachgeschaltet ist, wobei die Geschwindigkeit der einzelnen Förderer mit zunehmender Entfernung von dem zu entladenden Transportbehälter gleich oder größer der Geschwindigkeit des vorhergehenden Förderers ist.

4. Vorrichtung zur Durchführung des Verfahrens nach einem der Ansprüche 1 bis 3, dadurch gekennzeichnet, daß als Aufnahmeeinrichtung (3) ein Gurtförderer (3.1) vorgesehen ist, der zwei Umlenkrollen (4.5) aufweist, von denen die in Förderrichtung erste Umlenkrolle (4) wesentlich kleiner im Durchmesser ausgeführt ist als die zweite Umlenkrolle (5) und daß die beiden Umlenkrollen (4.5) derart angeordnet sind, daß der Leertrum (6) im Betrieb nahezu parallel zum Boden des Transportbehälters (1) verläuft, wobei die Aufnahmeeinrichtung (3) um eine horizontale und/oder vertikale Achse verschwenkbar befestigt ist.

5. Vorrichtung nach Anspruch 4, dadurch gekennzeichnet, daß der Durchmesser der ersten Umlenkrolle (4) kleiner als 70 mm ist.

6. Vorrichtung nach einem der Ansprüche 4 oder 5, dadurch gekennzeichnet, daß die Aufnahmeeinrichtung (3) an dem nachfolgenden Gurtförderer (8) befestigt ist.

7. Vorrichtung nach einem der Ansprüche 4 bis 6, dadurch gekennzeichnet, daß die Aufnahmeeinrichtung (3) horizontal verschiebbar an dem Gurtförderer (8) befestigt ist.

8. Vorrichtung nach einem der Ansprüche 4 bis 7, dadurch gekennzeichnet, daß die Aufnahmeeinrichtung (3) die Breite einer Reihe des zu entladenden Gutes aufweist.

9. Vorrichtung nach einem der Ansprüche 4 bis 8, dadurch gekennzeichnet, daß die Aufnahmeeinrichtung (3) auf ihrer mit dem Boden des Transportbehälters (1) in Berührung gelangenden Unterseite mit Führungs- und/oder Abstandselementen ausgerüstet ist.

10. Vorrichtung nach einem der Ansprüche 4 bis 9, dadurch gekennzeichnet, daß seitlich an der Aufnahmeeinrichtung Führungs- und/oder Abstandselemente vorgesehen sind.

11. Vorrichtung nach Anspruch 10, dadurch gekennzeichnet, daß als Führungs- und Abstandselemente Rollen (12, 13), Walzen, Gleitkufen o. ä. vorgesehen sind.

12. Vorrichtung nach einem der vorangegangenen Ansprüche, dadurch gekennzeichnet, daß an den Seiten der Aufnahmeeinrichtung (3) Leitelemente (7) angeordnet sind, deren Höhe größer ist als die halbe Höhe des geschichteten Entladegutes.

13. Vorrichtung nach Anspruch 12, dadurch gekennzeichnet, daß als Leitelemente (7) ebene Platten vorgesehen sind.

14. Vorrichtung nach einem der vorangegangenen Ansprüche, dadurch gekennzeichnet, daß die Leitelemente (7) seitlich neben der Aufnahmeinrichtung (3) und/oder dem anschließenden Gurtförderer (8) im Anschluß an den Transportbehälter (1) angeordnet ist.

15. Vorrichtung nach einem der vorangegangenen Ansprüche, dadurch gekennzeichnet, daß die Leitelemente (7) mit einer oberen Abdeckung zu einem Tunnel verbunden sind, an dessen Boden die Aufnahmeeinrichtung (3) und/oder der/die Gurtförderer angeordnet ist/sind.

## Claims

1. A method of unloading successive rows of stacked articles (2) from vehicles (1) such as lorries, containers, wagons or the like, wherein the relatively small-diameter front guide-roller region of a receiving device (3) in the form of a belt conveyor (3.1) exerts a lifting and withdrawing force on the front sides of the articles so that the articles are raised at the front side, gripped underneath by an advance movement of the belt conveyor, and simultaneously withdrawn to the exterior, characterised in that, in order to unload articles (2) such as vehicle tyres which are deformable and therefore movable relatively to one another, the lowest layer (2.1) of articles on the floor of the vehicle is raised, gripped unterneath and removed first.

2. A method according to claim 1, characterised in that, after the front row of articles (2) has been gripped underneath, the advance motion is ended until the gripped row has been completely removed.

3. A method according to claim 1 or 2, characterised in that the receiving device is disposed in front of a number of independently-drivable belt conveyors (8), the speed of the individual conveyors at increasing distances from the unloaded vehicle being the same as or greater than the speed of the preceding conveyor.

4. A device for carrying out the method according to any of claims 1 to 3, characterised in that the receiving device (3) is a belt conveyor (3.1) comprising two guide rollers (4.5), the first roller (4) in the conveying direction having a considerably smaller diameter than the second roller (5), and that the two rollers (4.5) are so disposed that, during operation, the return strand (6) of the belt extends almost parallel to the floor of the vehicle (1), the receiving device (3) being pivotably secured around a horizontal and/or vertical axis.

5. A device according to claim 4, characterised in that the diameter of the first guide roller is less than 70 mm.

6. A device according to claim 4 or 5, characterised in that the receiving device (6) is secured to the next following belt conveyor (8).

7. A device according to any of claims 4 to 6, characterised in that the receiving device (3) is secured in a horizontally movable manner to the belt conveyor (8).

8. A device according to any of claims 4 to 7, characterised in that the receiving device (3) has the width of a row of the article to be unloaded.

9. A device according to any of claims 4 to 8, characterised in that the unterside of the receiving device (3) in contact with the floor of the vehicle (1) is provided with guide and/or spacer means.

10. A device according to any of claims 4 to 9, characterised in that guide and/or spacer means are provided at the side of the receiving device.

11. A device according to claim 10, characterised in that the guide and spacer means are pulleys (12, 13), rollers, runners or the like.

12. A device according to any of the preceding claims, characterised in that guide elements (7) are disposed at the side of the receiving device (83) and are higher than half the height of the stacked goods for unloading.

13. A device according to claim 12, characterised in that the guide elements (7) are flat plates.

14. A device according to any of the preceding claims, characterised in that the guide elements (7) are disposed at the side of the receiving device (2) and/or the adjacent belt conveyor (8) next to the vehicle (1).

15. A device according to any of the preceding claims, characterised in that the guide elements (7) are combined with an upper cover to form a tunnel on the floor of which the receiving device (3) and/or the belt conveyor or conveyors are disposed.

## Revendications

1. Procédé pour charger, à partir de récipients de transport (1) tels que des camions, des conteneurs, des wagons, ou analogues, des rangées disposées l'une derrière l'autre de produits (2) empilés les uns sur les autres, un effort de traction et de soulèvement étant exercé sur le côté frontal du produit au moyen d'un dispositif de préhension (3) revêtant la forme d'un transporteur à courroies (3.1) par la partie antérieure de ce dispositif comportant un rouleau de renvoi de diamètre relativement réduit, de façon que les produits soient soulevés frontalement, que le transporteur à courroies poussé en avant passe au-dessous d'eux et qu'il soit en même temps retiré vers l'extérieur, dispositif caractérisé en ce que, pour décharger des produits (2) déformables, et donc relativement mobiles les uns par rapport aux autres, tels que pneus de véhicules automobiles, la couche la plus inférieure (2.1) des produits, reposant sur le fond du récipient de transport, soit soulevée, que le dispositif de préhension passe sous cette couche et qu'elle soit en premier lieu retirée.

2. Procédé selon la revendication 1, caractérisé en ce qu'après que le dispositif de préhension soit passé en dessous de la rangée antérieure des produits (2), son déplacement vers l'avant soit terminé, jusqu'à ce que la rangée sous laquelle il est passé soit complètement retirée.

3. Procédé selon la revendication 1 ou 2, caractérisé en ce qu'à la suite du dispositif de préhension est branchée une pluralité (8) de transporteurs à courroies susceptibles d'être entraînés indépendamment les uns des autres, la vitesse de ces transporteurs individuels étant identique ou supérieure à la vitesse du transporteur précédent, lorsque la distance à partir du récipient de transport à décharger, augmente.

4. Dispositif pour la mise en œuvre du procédé, selon une des revendications 1 à 3, caractérisé en ce qu'il est prévu comme dispositif de préhension (3), un transporteur à courroies (3.1) qui comporte deux rouleaux de renvoi (4, 5) dont le premier rouleau de renvoi (4) selon la direction de transport, est réalisé avec un diamètre très inférieur que le second rouleau de renvoi (5), et ces deux rouleaux de renvoi (4, 5) étant disposés de façon que le brin vide (6) soit pendant le fonctionnement à peu près parallèle au fond du récipient de transport (1), le dispositif de préhension (3) étant fixé de façon à pouvoir pivoter autour d'un axe horizontal et/ou d'un axe vertical.

5. Dispositif selon la revendication 4, caractérisé en ce que le diamètre du premier rouleau de renvoi (4) est inférieur à 70 mm.

6. Dispositif selon une des revendications 4 ou 5, caractérisé en ce que le dispostif de préhension (3) est fixé sur le transporteur à courroies suivant (8).

7. Dispositif selon une des revendications 4 à 6, caractérisé en ce que le dispositif de préhension (3) est fixé sur le transporteur à courroies (8) en étant susceptible d'être déplacé horizontalement.

8. Dispositif selon une des revendications 4 à 7, caractérisé en ce que le dispositif de préhension (3) a la largeur d'une rangée du produit à décharger.

9. Dispositif selon une des revendications 4 à 8, caractérisé en ce que le dispositif de préhension (3) est guidé sur sa face inférieure venant en contact avec le fond du récipient de transport (1) d'éléments de guidage et/ou d'entretoisement.

10. Dispositif selon une des revendications 4 à 9, caractérisé en ce que des éléments de guidage et/ou d'entretoisement sont prévus latéralement sur le dispositif de préhension.

11. Dispositif selon la revendication 10, caractérisé en en qu'il est prévu comme éléments de guidage et d'entretoisement (12, 13), des cylindres, des patins de glissement ou analogues.

12. Dispositif selon une des précédentes revendications, caractérisé en ce qu'il est prévu sur le côté du dispositif de préhension (3) des éléments d'orientation (7) dont la hauteur est supérieure à la moitié de la hauteur du produit de décharge empilé.

13. Dispositif selon la revendication 12, caractérisé en ce que, comme éléments d'orientation (7) il est prévu des plaques planes.

14. Dispositif selon une des précédentes revendications, caractérisé en ce que les éléments d'orientation (7) sont disposés latéralement à côté du dispositif de préhension (3) et/ou du transporteur à courroies (8) s'y raccordant, en étant eux-mêmes raccordés au récipient de transport (1).

15. Dispositif selon une des précédentes revendications, caractérisé en ce que les éléments d'orientation (7) sont reliés par un recouvrement supérieur pour constituer un tunnel sur le fond duquel est placé le dispositif de préhension (3) et/ou le ou les transporteurs à courroies.

FIG. 1

FIG. 2

0 185 339

FIG. 3

FIG. 4

FIG. 5

0 185 339

FIG. 6

0 185 339